(19) Europäisches Patentamt
European Patent Office
Office européen des brevets

(11) EP 0 499 994 B1

(12) EUROPÄISCHE PATENTSCHRIFT

(45) Veröffentlichungstag und Bekanntmachung des Hinweises auf die Patenterteilung:
**02.05.1997 Patentblatt 1997/18**

(51) Int Cl.⁶: **C10M 105/38**, C10M 171/00, C09K 5/04 // C10N40/30

(21) Anmeldenummer: **92102556.5**

(22) Anmeldetag: **15.02.1992**

# (54) Schmiermittel für Kältemaschinen

Lubricants for refrigertating machines

Lubrifiants pour machines frigorifiques

(84) Benannte Vertragsstaaten:
**AT BE CH DE DK ES FR GB GR IT LI NL PT SE**

(30) Priorität: **19.02.1991 DE 4104994**
**26.02.1991 DE 4105956**

(43) Veröffentlichungstag der Anmeldung:
**26.08.1992 Patentblatt 1992/35**

(73) Patentinhaber:
- **DEA Mineraloel Aktiengesellschaft**
**D-22204 Hamburg 60 (DE)**
- **Texaco Deutschland GmbH**
**20459 Hamburg (DE)**

(72) Erfinder:
- **Grasshoff, Hans Dieter**
**W-2000 Hamburg 60 (DE)**
- **Synek, Vladislav**
**W-2000 Hamburg 63 (DE)**
- **Kohnz, Harald, Dr.**
**W-4200 Oberhausen 11 (DE)**

(74) Vertreter: **Schupfner, Gerhard D. et al**
**Patentanwälte**
**Müller, Schupfner & Gauger**
**Postfach 17 53**
**21236 Buchholz (DE)**

(56) Entgegenhaltungen:
**EP-A- 0 406 479**
**EP-A- 0 430 657**
**EP-A- 0 448 402**
**EP-A- 0 458 584**
**WO-A-90/12849**
**WO-A-92/01030**
**FR-A- 2 414 545**
**US-A- 2 807 155**
**US-A- 4 851 144**

Bemerkungen:
Die Akte enthält technische Angaben, die nach dem Eingang der Anmeldung eingereicht wurden und die nicht in dieser Patentschrift enthalten sind.

EP 0 499 994 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Schmiermittel auf Basis synthetischer Ester, die sich zur Schmierung von Kältemaschinen, Wärmepumpen und verwandten Anlagen, wie Klimaanlagen, eignen, und zwar insbesondere zur Schmierung von mit Fluorkohlenstoff-Kältemitteln, wie Tetrafluorethan, Difluorethan und ähnlichen Verbindungen, betriebenen Kältemaschinen.

Als Kältemittel sind verschiedene Verbindungen bekannt. Das Kältemittel HFC 134a, 1,1,1,2-Tetrafluorethan der chemischen Formel $CFH_2$-$CF_3$ , ist als Ersatzprodukt in erster Linie für das Kältemittel CFC 12, Dichlordifluormethan der chemischen Formel $CCl_2F_2$ , entwickelt worden, das bekanntlich neben anderen wie beispielsweise CFC 11, Trichlorfluormethan der chemischen Formel $CCl_3F$ in hohem Maße am Abbau der Ozonschicht beteiligt ist. Wegen der Umweltgefährdung wird man zukünftig Fluorchlorkohlenwasserstoffe - abgekürzt FCKW - vom Typ CFC 12 oder CFC 11 nicht mehr verwenden. Nach dem Protokoll von Montreal - "Montreal Protocol on Substances that Depletes the Ozone Layer" - von 1987 sowie weiteren internationalen Vereinbarungen sind sie durch solche zu ersetzen, die diese Art der Schädigung der Umwelt nicht verursachen. Hierzu gehört auch das Kältemittel HFC 152a, 1,1-Difluorethan. Wegen der leichten Entflammbarkeit dieses Fluorkohlenwasserstoffes wird man ihn wahrscheinlich nur in Mischungen mit anderen Kältemitteln verwenden.

Schmiermittel für Kältemaschinen bestehen heute noch überwiegend aus hochausraffinierten Mineralölen, die zur Verbesserung der Fließeigenschaften in der Kälte über das für Schmieröle übliche Maß hinaus entparaffiniert sind. In beträchtlichen Mengen werden auch synthetische oder teilsynthetische Kältemaschinenöle auf Basis von Alkylbenzolen eingesetzt, wie beispielsweise in der DE-PS 35 22 165 beschrieben. In begrenztem Umfange werden auch Polyalphaolefine eingesetzt.

Die bisher verwendeten Kältemaschinenöle, sei es auf Basis von Mineralölen oder auf Basis synthetischer Flüssigkeiten, sind alle in Kombination mit den bisher bekannten Kältemitteln eingesetzt worden.

Für die einwandfreie Funktion eines Kältekompressors ist die Verträglichkeit des Kältemittels mit dem Kältemaschinenöl von entscheidender Bedeutung. Die thermodynamischen Eigenschaften sowie das Fließverhalten der Arbeitsflüssigkeit, bestehend aus dem Kältemittel und dem Schmierstoff, ihre Mischbarkeit und chemische Stabilität sind Faktoren, die bei der Wahl eines Schmierstoffes berücksichtigt werden müssen.

Sollen nun Kältemaschinenöle auf der Basis von Kohlenwasserstoffen wie zum Beispiel Mineralöl oder Syntheseöl zusammen mit HFC 134a verwendet werden, so besteht hierbei die Schwierigkeit, daß sich letzteres nicht löst. Damit ist die Funktion des Kältekompressors beeinträchtigt. Ursache dafür ist die im Vergleich zu CFC 12 höhere Polarität, bedingt durch die Asymmetrie des $CFH_2$-$CF_3$ Moleküls. Das gleiche gilt auch für den Fluorkohlenwasserstoff Difluorethan ($CHF_2$-$CH_3$).

Als synthetische Flüssigkeiten, die diese Nachteile vermeiden sollen, bieten sich polare Polyalkylenglykole an, die bekanntlich ausgezeichnete Schmiermittel sind. Versuche deuten jedoch darauf hin, daß die Verwendung von Polyalkylenglykolen nicht ganz unproblematisch ist. Es erwies sich beispielsweise als schwierig, bedingt durch die hohe Polarität, die Feuchtigkeit in tolerierbaren Grenzen zu halten. Wasser in Kältesystemen kann jedoch nicht nur den Kältekreislauf stören, sondern auch Korrosion verursachen. Darüber hinaus können die freien Hydroxylgruppen der Polyalkylenglykole auch bestimmte Aluminiumlegierungen angreifen, die immer häufiger in Kältekompressoren und entsprechenden Systemen verwendet werden. Ein weiterer Nachteil ist die Unverträglichkeit mit einigen in Kältekompressoren häufig verwendeten Elastomeren. Die Beanspruchung von Polyalkylenglykolen über einen längeren Zeitraum bei hohen Temperaturen - über 150 °C - kann auch zur Bildung von Abbauprodukten führen, die als Säuren in der Regel Korrosion verursachen.

Neopolyolester sind als Schmiermittel in Fluorchlorkohlenwasserstoffen bekannt. Schon Williamitis offenbart in der US-A-2,807,155 im Jahre 1957 Pentaerythritolester als Schmiermittel für mit Fluorchlorkohlenwasserstoffen betriebene Kältemaschinen aus. Vorzugsweise haben diese Ester C6-C10 Säurereste.

In der EP-A1-406479 und WO 90/12849 wird beschrieben, daß Neopentylpolyolester mit C2- bis C18-Säuregruppen bzw. einer Säuregruppe mit bis zu 22 C-Atomen auch in reinen Fluorkohlenwasserstoffen wie R134a bei tiefen Temperaturen löslich sind.

Ältere Rechte im Sinne des Artikel 54(3) EPÜ sind die folgenden vier Schutzrechte, die allesamt Polyolester als mögliche Schmiermittel für Fluorkohlenwasserstoffe in Kältemaschinen offenbaren. WO 92/01030 beschreibt Ester von Polyolalkoholen, wobei mehr als 22% der Säuregruppen verzweigte oder unverzweigte C1- bis C6- Säuren und weniger als 81 % unverzweigte langkettige Säuren mit 8 oder mehr Kohlenstoffatomen sind und das Verhältnis der langkettigen linearen zu den kurzkettigen Säuregruppen kleiner als 1,56 ist. Die EP-A1-458584 beschreibt Pentaerythritolester mit C4- bis C10-Säuregruppen. EP-A1-430657 und EP-A1-448402 beschreiben allgemein Neopentylpolyolester mit C2- bis C6- Säuregruppen.

Die Aufgabe der vorliegenden Erfindung ist es daher, als Schmiermittel für Kältemaschinen solche Stoffe bereitzustellen, die die genannten Nachteile nicht aufweisen, wohl aber mit dem verwendeten Kältemittel verträglich sind.

Erfindungsgemäß erfolgt die Lösung dieser Aufgabe durch die Bereitstellung von Schmiermitteln für Kältemaschinen, die im wesentlichen aus einem Ester oder Estergemisch der Umsetzung von überwiegend geradkettigen, gesättigten Monocarbonsäuren mit 5 bis 10 Kohlenstoffatomen als Säurekomponente und Alkoholen mit 3 bis 6 Hydroxylgruppen sowie einem oder zwei quartären Kohlenstoffatomen als Alkoholkomponente bestehen.

Ester sind Verbindungen, die in einer Gleichgewichtsreaktion aus einem Alkohol und einer Säure, beispielsweise einer Carbonsäure, unter Abspaltung von Wasser entstehen.

Die Veresterung von Monocarbonsäuren mit Alkoholen erfolgt heute meist in Gegenwart saurer Katalysatoren bei Temperaturen zwischen 100 und 200 °C. Es schließen sich diverse Reinigungsprozeduren an, um ein wasserfreies und weitgehend neutrales Produkt zu erhalten.

Die zur Veresterung eingesetzten Alkohole müssen erfindungsgemäß ein oder zwei quartäre Kohlenstoffatome enthalten, wie beispielsweise Trimethyloläthan und Trimethylolpropan, die jeweils drei Hydroxylgruppen aufweisen. Der erfindungsgemäß bevorzugt verwendete Alkohol ist das Pentaerythritol. Es wird in technischem Maßstabe aus einer Reaktion des Formaldehyds mit Acetaldehyd und Calciumhydroxid gewonnen:

$$8\ HCHO + 2\ CH_3CHO + Ca(OH)_2 \rightleftharpoons 2\ C(CH_2OH)_4 + Ca(HCOO)_2$$

Bei der Herstellung des Pentaerythritols fällt auch in unterschiedlichen Mengen Dipentaerythritol der chemischen Formel $(CH_2OH)_3CCH_2\text{-}O\text{-}CH_2C(CH_2OH)_3$ an. Es ist im sogenannten technischen Pentaerythritol in einer Größenordnung von 5 bis 15 % enthalten. Ester gemäß der Erfindung sind sowohl aus technischem Pentaerythritol (TPE), reinem Pentaerythritol (PE) und Dipentaerythritol (DPE) sowie aus Gemischen dieser Alkohole hergestellt worden.

Im Verlauf der Entwicklung erfindungsgemäßer Schmiermittel wurde erkannt, daß besonders gute Ergebnisse, insbesondere hinsichtlich der Löslichkeit erzielt werden, wenn als Hauptkomponente n-Pentansäure zur Veresterung verwendet wurde. Die bevorzugt verwendete n-Pentansäure wird technisch durch Oxidation der entsprechenden Oxoaldehyde mit Sauerstoff hergestellt. Die höhermolekularen Monocarbonsäuren kommen in der Natur als Ester (Fette) vor und werden aus ihnen durch Fettspaltung gewonnen, z.B. aus Kokosöl. Die verzweigten Monocarbonsäuren werden entweder durch Oxidation von Oxoaldehyden oder durch Carbonylierung von Olefinen oder Alkoholen in Gegenwart saurer Katalysatoren nach der Koch'schen Carbonsäuresynthese hergestellt.

Als Schmiermittel für die Kombination mit den Kältemitteln HFC 134a und HFC 152a und ähnlichen Kältemitteln in Kältemaschinen eignen sich vorzüglich die Ester gemäß der vorliegenden Erfindung. Die hohe Polarität ermöglicht eine für die Funktion der Ester als Schmiermittel gute Löslichkeit insbesondere in den Kältemitteln HFC 134a und HFC 152a.

Die Polarität eines Esters läßt sich - angegeben als "Non Polarity Index" - nach folgender Formel berechnen:

$$\text{Non Polarity Index (NPI)} = \frac{\text{Anzahl der C-Atome x Molekulargewicht}}{\text{Anzahl der Carboxylgruppen x 100}}$$

Nach dieser Formel sollte der NPI von als Schmiermittel zum Einsatz in Kältemaschinen geeigneten Estern möglichst niedrig liegen. Entsprechend niedrige Indices besitzen die Ester gemäß der vorliegenden Erfindung.

Im Falle von Pentaerythritolestern liegen die Molekulargewichte im Bereich von 360 bis 850, vorzugsweise zwischen 400 und 700, bei Dipentaerythritolestern im Bereich von 560 bis 1300, vorzugsweise zwischen 700 und 850.

Im folgenden sind beispielsweise Ester beschrieben, die aufgrund ihres niedrigen NPI zusammen mit Kältemitteln wie HFC 134a oder ähnlichen einsetzbar sind:

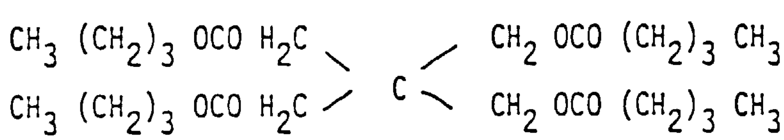

NPI 30

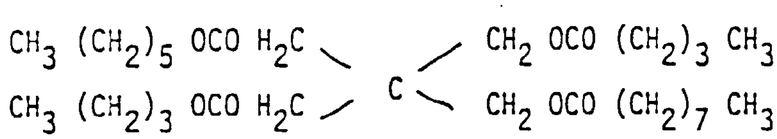

NPI 43

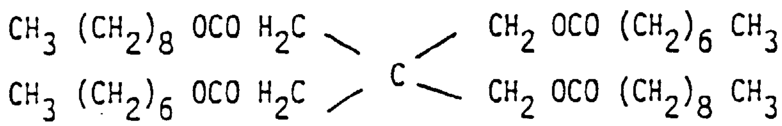

NPI 71

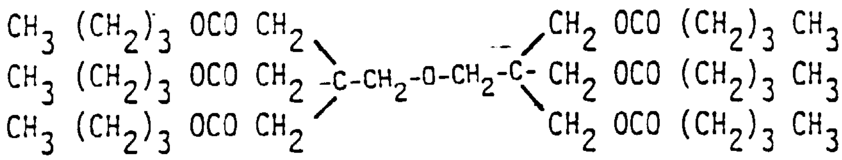

NPI 51

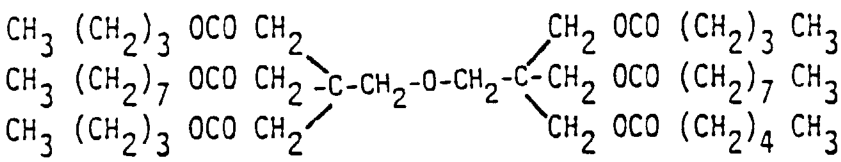

NPI 72

Als technische Produkte und insbesondere bei Verwendung verschiedener Monocarbonsäuren fallen die Ester nur zum Teil in den aufgeführten - idealisierten - Formulierungen an. In der Regel sind es Gemische verschiedener Ester, deren Anzahl von Rohstoffeinwaage und Verfahrenstechnik abhängt.

Da der NPI proportional ist zum Molekulargewicht des Esters, sollte schon das Molekulargewicht der verwendeten Carbonsäuren niedrig sein. Werden unterschiedliche Monocarbonsäuren eingesetzt, so daß Gemische verschiedener Ester entstehen, sollte die Säurekomponente bezogen auf den Gesamtcarbonsäureeinsatz aus 60-80 Molgew.% n-Pentansäure bestehen. Im Falle verzweigter Carbonsäuren kann sie aus bis zu 30 Molgew.% , vorzugsweise aus 3 bis 10 Molgew.% 2-Äthylhexansäure bestehen, ebenfalls bezogen auf den gesamten Carbonsäureeinsatz.

Die Ester bzw. Estergemische gemäß der vorliegenden Erfindung sind eingehend untersucht worden. Die Tests erstreckten sich von der Ermittlung physikalisch-chemischern Daten bis zu ihrer Prüfung unter praktischen Bedingungen in Kältekompressoren.

TABELLE 1

| Beispiel | 1 | 2 | 3 | 4 | 5 | 6 |
|---|---|---|---|---|---|---|
| Typ: Alkohol | TPE | TPE | TPE | TPE/DPE | TPE | TPE |
| Typ: Carbonsäuregemisch (C-Zahl) | 5/8/9 | 5/9 | 5/6/9 | 5/8/9 | 5/7/9 | 5/8/8 |
| Viskosität, $mm^2/s$ | | | | | | |
| bei 40°C | 20,9 | 20,0 | 21,0 | 33,5 | 23,7 | 33,5 |
| bei 100°C | 4,4 | 4,3 | 4,4 | 6,2 | 4,8 | 5,9 |
| Dichte/15°C, $kg/m^3$ | 998 | 998 | 993 | 1005 | 993 | 973 |
| Pour Point, °C | -58 | -59 | -59 | -55 | -57 | -48 |
| Neutralisationszahl, mgKOH/g | 0,06 | 0,1 | 0,07 | 0,05 | 0,06 | 0,08 |

TPE = Pentaerythritol, technisch
DPE = Dipentaerythritol

Verwendete Ester bzw. Estergemische mit typischen Kenndaten Die zweite Tabelle gibt einen Überblick über die Löslichkeit der Ester in HFC 134a in Abhängigkeit von Polarität und Molekulargewicht. Ihr Einfluß auf die Löslichkeit

der Ester geht aus der Gegenüberstellung hervor. Die Beispiele 1 bis 6 zeigen Löslichkeitswerte, die diese Ester als Schmiermittel für Kältekompressoren, in denen als Kältemittel HFC 152a und HFC 134a eingesetzt werden, als besonders geeignet auszeichnen. Hierbei ist die abnehmende Tendenz der Löslichkeit von Beispiel 1 bis Beispiel 6 zu erkennen.

TABELLE 2

| Beispiel | Viskosität $mm^2/s$ | Molgewicht | NPI | Löslichkeit in R 134a (%) von (untere) bis (obere) Temperatur | | |
|---|---|---|---|---|---|---|
| | | | | 5 % | 10 % | 20 % |
| 1 | 20,9 | 560 | 40 | -60/>100 | -57/>100 | -57/>100 |
| 2 | 20,0 | 517 | 37 | <-60/>100 | -51 />100 | -49/>100 |
| 3 | 21,0 | 559 | 45 | -54/>100 | -44 />100 | -34/>100 |
| 4 | 33,5 | 680 | 52 | -47/ +99 | -37 / +98 | -30/ +98 |
| 5 | 23,7 | 660 | 64 | -60/>100 | -40 />100 | -27/>100 |
| 6 | 33,5 | 630 | 58 | -16/ +98 | +2 / +88 | +16/ +80 |
| Löslichkeit der Ester in HFC 134a bei verschiedenen Temperaturen | | | | | | |

Die hygroskopischen Eigenschaften des Ester, d.h. Aufnahme von Wasser, zum Beispiel durch feuchte Luft, sind besonders für die Anwendung als Kältemaschinenöl von Bedeutung. Ein zu hoher Wassergehalt kann nicht nur die Funktionsfähigkeit einer Kälteanlage negativ beeinflussen, sondern fördert auch die Neigung zu Korrosion in dem System. Kältemaschinenöle müssen deshalb so trocken wie möglich in Kältekompressoren eingefüllt werden. Eine Trocknung der Produkte ist unabdingbar. Als Substanzen polaren Charakters, Voraussetzung für ihre Löslichkeit in polaren Kältemitteln wie HFC 134a, sind Ester zwangsläufig hygroskopischer als Substanzen unpolarer Natur. Polyalkylenglykole sind dagegen erheblich hygroskopischer als Ester.

Zur Ermittlung der hygroskopischen Eigenschaften wurden die auf einen bestimmten Wassergehalt getrockneten Produkte in Mengen von jeweils 10 ml in Reagenzgläser gegeben, die dann unverschlossen bei relativer Luftfeuchtigkeit von 75 % und einer Temperatur von 20 °C (Durchschnittswerte) gelagert wurden. Die Wasserbestimmung erfolgte nach der bekannten Methode von Karl Fischer. Die Ergebnisse sind in der Tabelle 3 aufgeführt. Die Beispiele 1 bis 6 beziehen sich auf Ester gemäß der vorliegenden Erfindung entsprechend Tabelle 1. Bei den Beispielen 7 und 8 handelt es sich um Polyalkylenglykole, die mit den eingangs geschilderten Nachteilen als Kältemaschinenöle angeboten werden.

TABELLE 3

| Zeit | 0 | nach 1 h | nach 2 h | nach 5 h | nach 24 h | nach 48 h |
|---|---|---|---|---|---|---|
| Beispiel 1 | 77 | 88 | 100 | 115 | 175 | 285 |
| Beispiel 2 | 85 | 100 | 162 | 260 | 408 | 536 |
| Beispiel 3 | 81 | 135 | 170 | 180 | 251 | 310 |
| Beispiel 4 | 92 | 150 | 155 | 170 | 285 | 363 |
| Beispiel 5 | 80 | 150 | 150 | 155 | 163 | 274 |
| Beispiel 6 | 98 | 133 | 135 | 145 | 161 | 293 |
| Beispiel 7 | 311 | 631 | 757 | 1514 | 2813 | 4225 |
| Beispiel 8 | 200 | 370 | 621 | 1373 | 2710 | 4121 |
| Hygroskopische Eigenschaften der Ester im Vergleich zu Polyglykolen ( ppm $H_2O$ in Öl ) | | | | | | |

Zum Nachweis der thermischen, chemischen und hydrolytischen Stabilität wurden die Ester einem in Anlehnung an den von ASHRAE (ANSI/ASHRAE 97-1989) genormten Stabilitätstest unterzogen.

Die thermische Stabilität von Pentaerythriolestern gemäß der Erfindung ist aufgrund ihrer Molekülstruktur - in Beta-Stellung der Alkoholgruppe befindet sich kein Wasserstoff - ausgezeichnet. Es ist bekannt, daß Ester dieses Typs mindestens bis 260 °C stabil sind. In Kältekompressoren werden diese Temperaturen im allgemeinen nicht erreicht. Es sind jedoch Anwendungsfälle vorstellbar bei denen die Temperatur entsprechend hoch liegt, zum Beispiel bei sehr hohem Druck zur Erzielung niedriger Temperaturen, so daß die Ester mit Hilfe von Zusätzen stabilisiert werden müssen. Es hat sich gezeigt, daß die sich bei der Zersetzung der Ester bildenden Radikale sehr gut mit sogenannten "Radikalfängern" in eine dem System unschädliche Form umgewandelt werden können. Unter Radikalfängern sind solche Produkte wie beispielsweise Triphenylmethan zu verstehen, deren Wirkungsweise allgemein bekannt ist (Fieser, Organische Chemie, 2. Auflage, Seiten 409-415).

Sofern eine Radikalspaltung von Estern erfolgt, verläuft sie nach folgendem Mechanismus:

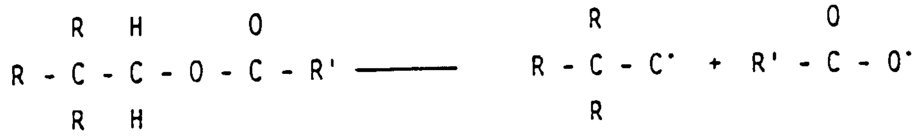

Die freien Radikale werden bei Anwesenheit eines Radikalfängers wie Triphenylmethan eliminiert.

Die Tests mit getrockneten und feuchten Proben erfolgten nach folgender Verfahrensweise : Entsprechend vorbereitete -gereinigte und gesäuerte - Glasröhrchen von 200 mm Länge und einem Innendurchmesser von 5 bis 7 mm wurden an einem Ende verschweißt und am anderen Ende in einer Länge von etwa 5 cm auf 1,5 mm verjüngt. In so vorbereitete Gläser wurden ein Kupferdraht (Länge 30 mm/Querschnitt 1 mm), ein Stahlstreifen (50 x 3 mm) und ein Aluminiumstreifen (30 x 5 mm) eingeführt, 1,5 g Schmiermittel eingewogen und in einer speziellen Vorrichtung unter Vakuum und Tiefkühlung 0,7 g des Kältemittels HFC 134a zugefügt. Unter Zufuhr von Stickstoff wurden dann die Gläser nach Zugabe des Kältemittels verschweißt. Die Gläser kamen anschließend in einen Trockenschrank, der in einem vorgegebenen Zeitraum auf die Prüftemperatur von 175 °C zu erhitzen war. Die Testdauer betrug 2 Wochen. Im Verlauf der Prüfung wurden die Proben auf Farbänderungen und Ablagerungen visuell kontrolliert. Die Metalle wurden ebenfalls auf Veränderungen an der Oberfläche hin beobachtet.

Die unterschiedlichen Feuchtegrade der untersuchten Öle wurden wie folgt eingestellt: Die getrockneten Öle (Feuchtegrad 1) wurden Gefäßen entnommen, in denen sie zuvor über einen Zeitraum von 2 Monaten gelagert worden waren. Diese wurden vor dem Füllen der Öle in die Testrohre für 15 Minuten geöffnet. Die feuchten Proben wurden den gleichen (geöffneten) Behältern nach Lagerung bei 95 % relativer Luftfeuchtigkeit nach einer Stunde (Feuchtegrad 2) und nach 24 Stunden (Feuchtegrad 3) entnommen und in die Teströhrchen gefüllt.

In nachfolgender Tabelle 4 sind die Feuchtegrade für die Kältemaschinenöle der Beispiele 4, 5, 6, sowie für ein Polyalkylenglykol nach Vergleichsbeispiel 7, aufgeführt.

TABELLE 4

| Feuchtegrad (ppm $H_2O$ in Öl) | 1 | 2 | 3 |
|---|---|---|---|
| Beispiel 4 | 94 | 208 | 1800 |
| Beispiel 5 | 83 | 180 | 1200 |
| Beispiel 6 | 102 | 213 | 1800 |
| Beispiel 7 | 405 | 1600 | 22300 |

Die Testergebnisse sind in Tabelle 5 zusammengestellt. Wie diese Ergebnisse zeigen, unterliegen die Ester selbst in Gegenwart relativ hoher Anteile von Wasser keinem thermischen oder hydrolytischen Zerfall. Die Neigung zum Hydrolysieren ist im übrigen umso geringer, je reiner die Ester nach dem Fertigungsprozeß vorliegen. Ein Hinweis für ihre Reinheit ist die Neutralisationszahl, gemessen nach DIN 51558. Sie sollte für Ester gemäß der vorliegenden Erfindung den Wert von 0,2 mgKOH/g nicht überschreiten.

TABELLE 5

| Beispiel | | 4 | 5 | 6 | 7 |
|---|---|---|---|---|---|
| Farbe | Feuchtegrad 1 | ------------ keine Veränderung ------------ | | | |
| | Feuchtegrad 2 | ------------ keine Veränderung ------------ | | | |
| | Feuchtegrad 3 | ------------ keine Veränderung ------------ | | | |
| Aussehen | Feuchtegrad 1 | klar | klar | klar | klar |
| | Feuchtegrad 2 | klar | klar | klar | trübe |
| | Feuchtegrad 3 | klar | klar | klar | trübe |
| Stahl | Feuchtegrad 1 | ---- keine Veränderung der Oberfläche ----- | | | |

TABELLE 5 (fortgesetzt)

| Beispiel | | 4 | 5 | 6 | 7 |
|---|---|---|---|---|---|
| | Feuchtegrad 2 | - keine Veränderung der Oberfläche - | | | matt |
| | Feuchtegrad 3 | - keine Veränderung der Oberfläche - | | | buntfleckig |
| Kupfer | Feuchtegrad 1 | ---- keine Veränderung der Oberfläche ----- | | | |
| | Feuchtegrad 2 | ---- keine Veränderung der Oberfläche ----- | | | |
| | Feuchtegrad 3 | ---- keine Veränderung der Oberfläche ----- | | | |
| Aluminium | Feuchtegrad 1 | ---- keine Veränderung der Oberfläche ----- | | | |
| | Feuchtegrad 2 | ---- keine Veränderung der Oberfläche ----- | | | |
| | Feuchtegrad 3 | - keine Veränderung der Oberfläche - | | | weiß |
| Stabilität von Ester gemäß der Erfindung im Vergleich zu Polyglykolen | | | | | |

Die Funktion eines Kältekompressors hängt wesentlich von der einwandfreien Schmierung aller sich bewegenden Teile ab. Ester, insbesondere Polyolester, sind seit vielen Jahren als hervorragende Schmierstoffe für die unterschiedlichsten Anwendungsbereiche bekannt. Durch ihre Polarität besitzen sie eine hohe Affinität zu Metalloberflächen und schützen damit im Bereich der Grenzschmierung bei Metall/Metall-Berührung besser vor Verschleiß als beispielsweise die bekannten Schmierstoffe auf Basis reiner Kohlenwasserstoffe wie beispielsweise Mineralöl oder Polyalphaolefin.

Die Prüfung erfolgte nach der Falex-Methode, die nach ASTM-D 2670 standardisiert ist. Nach diesem Verfahren werden zwei prismatische Prüfkörper mit kontinuierlich zunehmender Kraft gegen eine rotierende Welle gedrückt, die in einem Prüfölbad läuft. Je nach Belastbarkeit des zu prüfenden Schmierstoffes kommt es bei einer bestimmten Belastung an den Gleitflächen zu Freßverschleiß. Durch die hierbei sich sprunghaft erhöhende Reibungskraft bricht die Welle. Die Höhe der erreichten Belastung - in "pounds" - ist ein Beurteilungsmaßstab für die Schmierfähigkeit des Schmierstoffes und wird allgemein als "Freßlast" bezeichnet.

Die vergleichenden Versuche mit dem Falex-Tester zeigen deutlich die Überlegenheit der Ester, insbesondere gegenüber Mineralöl und Polyalphaolefin. Ergebnisse der Untersuchungen sind in Tabelle 6 wiedergegeben.

TABELLE 6

| Beispiele | 1 | 2 | 3 | 4 | 5 |
|---|---|---|---|---|---|
| Typ | ---------- Ester gem. Erfindung ---------- | | | | |
| Freßlast (pounds) | 1050 | 1050 | 1075 | 1150 | 1125 |
| N | 4671 | 4671 | 4782 | 5115 | 5004 |
| Viskosität 40°C, $mm^2/s$ | 20,9 | 20,0 | 21,0 | 33,5 | 23,7 |
| Beispiele | 6 | 7 | 8 | | 9 |
| Typ | Ester | PAG | Mineralöl | | Poly-α-olefin |
| Freßlast (pounds) | 1150 | 950 | 520 | | 430 |
| N | 5115 | 4226 | 2313 | | 1913 |
| Viskosität 40°C , $mm^2/s$ | 33,5 | 32 | 32 | | 32 |

Schmierungseigenschaften der Ester im Vergleich zu Polyalphaolefinen, Mineralöl und Polyalkylenglycol

Versuche mit Estern gemäß der vorliegenden Erfindung unter den genannten Bedingungen, jedoch in Gegenwart von HFC 134a, zeigen eine um 10 bis 15 % höhere Belastbarkeit.

Sollten unter bestimmten, schmiertechnisch schwer zu beherrschenden Anwendungsfällen Zusätze zur Minimierung des Verschleißes erforderlich sein, können diese,sofern sie für solche Anwendungsfälle geeignet sind, zugegeben werden. Aus der Schmierungstechnik sind zahlreiche Additive zur Verhinderung bzw. Minimierung von Verschleiß bekannt. Meist beruht ihre Wirkungsweise auf chemische Reaktionen mit der zu schmierenden Metalloberfläche unter Bildung einer vor Verschleiß schützenden Schicht. Bekannt sind beispielsweise sog. Schwefelträger wie geschwefelte

Olefine, deren Schwefel mit dem Eisen der Stahloberfläche unter Bildung von Eisensulfid, einer verschleißmindernden Schicht reagiert: Fe + S = FeS. Verschleißmindernde Schichten bilden auch organische Verbindungen des Chlors, Phosphors und Stickstoffs allein oder in Kombinationen, einige Fettsäuren, etc. Metallorganische Verbindungen des Bleis, Molybdäns sowie Seifen sind ebenfalls bekannte verschleißzusätze.

Die Verträglichkeit des Gemisches Schmierstoff/Kältemittel mit Dichtungsmaterialien (Elastomeren) ist eine weitere Voraussetzung für die Funktionsfähigkeit eines Kältekompressors. In der Industrie werden für unterschiedliche Anwendungszwecke verschiedene Typen von Elastomeren eingesetzt. Mit Estern gemäß der vorliegenden Erfindung wurden in Kombination mit HFC 134a und in Vergleichstesten mit dem herkömmlichen Kältemittel CFC 12 folgende in der Industrie verbreitet verwendete Elastomere auf Verträglichkeit untersucht: Chloropren A, Chloropren B und hydrierter Nitrobutylkautschuk.

Die Versuche wurden mit dem Kältemaschinenöl des Beispiels 6 und zum Vergleich mit einem handelsüblichen konventionellen Kältemaschinenöl auf Basis von Mineralöl in Gegenwart der Kältemittel HFC 134a bzw. CFC 12 durchgeführt.

Die Präparation der Proben erfolgte in der Weise, daß jeweils eine Mischung aus 15 % Kältemittel / 85 % Kältemaschinenöl in ein Glasröhrchen gefüllt wurde, das das zu prüfende Elastomer enthielt. Anschließend wurden die Glasröhrchen verschweißt und 165 Stunden einer Temperatur von 120 °C ausgesetzt. Nach Ablauf dieser Testzeit wurden die Röhrchen geöffnet und die Elastomere in Anlehnung an die nach DIN-ISO 1817 standardisierten Methoden untersucht. Das Ergebnis ist in Tabelle 7 zu sammengefaßt. Es ist festzustellen, daß zwischen den Proben, die das Kältemittel HFC 134a enthielten und den mit dem Kältemittel CFC 12 keine gravierenden Unterschiede auftreten. Es wurden solche Elastomere untersucht, die in der Kältetechnik verbreitet eingesetzt werden. Für den Anwender gibt diese Untersuchung den Hinweis, daß bei Wechsel des Kältemittels von CFC 12 auf HFC 134a keine Notwendigkeit besteht, anderes Dichtungsmaterial zu ver wenden.

TABELLE 7

| Kältemittel | | 134a | 12 | 12 |
|---|---|---|---|---|
| Kältemaschinenöl | | Beispiel 6 | Beispiel 6 | Mineralöl |
| Shore-A-Härte | Chloropren A | -5,0 | -9,1 | -14 |
| | Chloropren B | -4,0 | -7,1 | -8,5 |
| | HNBR | -17,2 | -6,8 | -4,9 |
| Volumen, % | Chloropren A | +17,0 | +27,1 | +27,9 |
| | Chloropren B | +14,3 | +26,2 | +27,1 |
| | HNBR | +19,5 | +12,0 | +9,0 |
| Gewicht, % | Chloropren A | +22,5 | +18,4 | +16,8 |
| | Chloropren B | +21,8 | +17,9 | +17,3 |
| | HNBR | +22,5 | +10,6 | +7,8 |
| Zugfestigkeit, % | Chloropren A | -25,0 | -6,2 | -5,6 |
| | Chloropren B | -30,0 | -25,9 | -19,6 |
| | HNBR | -0,3 | +15,9 | +21,5 |
| Reißdehnung, % | Chloropren A | -24,2 | -36,2 | -36,2 |
| | Chloropren B | -29,1 | -31,2 | -26,8 |
| | HNBR | -13,8 | -38,2 | -33,5 |
| Elastomerenverträglichkeit | | | | |

Die Eignung der Ester gemäß der vorliegenden Erfindung konnte auch direkt, nämlich in praktischen Tests in Kältekompressoren nachgewiesen werden. Es wurden Kompressoren der Firmen Danfoss und Bitzer für diese Tests verwendet.

Die Versuche liefen unter bestimmten Leistungsvorgaben über einen Zeitraum von 2000 Stunden. Nach Ablauf

der Versuche wurden sowohl die Kompressoren als auch die als Schmiermittel eingesetzen Ester einer eingehenden Prüfung unterzogen.

In keinem Fall kam es zu einem Ausfall eines Kompressors. Alle Teile befanden sich in einwandfreiem Zustand. Die Schmiermittel selbst waren in allen Daten unverändert.

Die Versuche liefen unter den (gemittelten) Bedingungen der Tabelle 8.

TABELLE 8

| Kompressortyp | Danfoss TL4 *) | Bitzer II *) |
| --- | --- | --- |
| Saugdruck, bar (absolut) | 2,80 | 2,40 |
| Verdichtungsdruck, bar (absolut) | 24,20 | 13,80 |
| Druckverhältnis | 8,64 | 5,75 |
| Verdichtungstemperatur, °C | - | 160 **) |
| Saugtemperatur, °C | - | 113 |
| Ölsumpftemperatur, °C | 110 | 93 |
| Schmierstoff, ml | 280 | 600 |
| Kältemittel, g . | 65 | 60 |

*) Während es sich bei den Kompressoren von Danfoss um handelsübliche, sog. vollhermetische Kompressoren handelt, wie sie beispielsweise in Kühlschränken eingesetzt werden, sind dies Kompressoren der Firma

Bitzer sog. offene Einheiten für allgemeine industrielle Anwendungen. Diese Kompressoren wurden jedoch für die Versuche modifiziert.

**) Gemessen im Zylinderkopf, Nähe Auslaßventil

**Patentansprüche**

1. Schmiermittel für Kältemaschinen, bestehend aus einem Ester oder Estergemisch der vollständigen Umsetzung mit gesättigten geradkettigen und verzweigten Monocarbonsäuren mit mehrwertigen Alkoholen, **dadurch gekennzeichnet**, daß der Ester besteht aus

   (A) einer Säurekomponente,

   (a) wobei die Säurekomponente bezogen auf den Gesamtcarbonsäureeinsatz aus mindestens 60 mol% und höchstens 80 mol% n-Pentansäure besteht,
   (b) wobei die Säurekomponente bezogen auf den Gesamtcarbonsäureeinsatz aus höchstens 30 mol% verzweigten gesättigten C5- bis C9-Monocarbonsäuren besteht und
   (c) wobei die Säurekomponente zu dem nach (a) und (b) verbleibendem Rest aus unverzweigten gesättigten C6- bis C10-Monocarbonsäuren besteht und

(B) einem Polyhydroxyalkohol als Alkoholkomponente mit 3 bis 6 Hydroxylgruppen sowie einem oder zwei quartären Kohlenstoffatomen.

**2.** Schmiermittel nach Anspruch 1 dessen Alkoholkomponente Pentaerythritol und/oder Dipentaerythritol ist.

**3.** Schmiermittel nach Anspruch 1 oder 2 , bestehend aus einem Ester oder Estergemisch, dessen unverzweigte langkettige Säurekomponente nach (A) (c) aus unverzweigten gesättigten C6- bis C9-Monocarbonsäuren besteht.

**4.** Schmiermittel nach Anspruch 1, 2 oder 3, bestehend aus einem Ester oder Estergemisch, dessen verzweigte Säurekomponente nach (A) (b) aus 2-Ethylhexansäure besteht.

**5.** Schmiermittel nach einem der Ansprüche 1 bis 4, bestehend aus einem Ester oder Estergemisch, dessen verzweigte Säurekomponente nach (A) (b) bezogen auf den Gesamtcarbonsäureeinsatz aus 3 bis 10 mol% einer verzweigten Monocarbonsäure besteht.

## Claims

**1.** Refrigerator lubricant consisting of an ester or a mixture of esters obtained by complete reaction of saturated, straight-chain and branched monocarboxylic acids with polyhydric alcohols characterized in that the ester consists of

(A) an acid constituent,

(a) said acid constituent consisting of at least 60 mol% and not more than 80 mol% n-pentanoic acid, referring to the total carboxylic acid feed,
(b) said acid constituent consisting of not more than 30 mol% branched, saturated $C_5$ to $C_9$ monocarboxylic acids, referring to the total carboxylic acid feed, and,
(c) said acid constituent consisting of unbranched, saturated $C_6$ to $C_{10}$ monocarboxylic acids in a quantity which is the remainder left according to (a) and (b), and

(B) a polyhydric alcohol as alcohol component with 3 to 6 hydroxyl groups and one or two quaternary carbon atoms.

**2.** Lubricant according to claim 1, wherein said alcohol component is pentaerythritol and/or dipentaerythritol.

**3.** Lubricant according to claim 1 or 2 consisting of an ester or a mixture of esters, wherein its unbranched, long-chain acid constituent according to (A) (c) consists of unbranched, saturated $C_6$ to $C_9$ monocarboxylic acids.

**4.** Lubricant according to claim 1, 2, or 3 consisting of an ester or a mixture of esters, wherein its branched acid constituent according to (A) (b) is 2-ethylhexanoic acid.

**5.** Lubricant according to any of claims 1 to 4 consisting of an ester or a mixture of esters, wherein its branched acid constituent according to (A) (b) consists of 3 to 10 mol% of a branched monocarboxylic acid, referring to the total carboxylic acid feed.

## Revendications

**1.** Lubrifiant pour machine frigorifique, consistant en un ester ou mélange d'esters de réaction complète avec des acides monocarboxyliques saturés, linéaires et ramifiés, avec des alcools polyvalents, caractérisé en ce que l'ester est constitué de :

(A) un composant acide

(a) où le composant acide se compose, sur base de la quantité totale d'acide carboxylique, d'au moins

60% en moles et d'au maximum 80% en moles d'acide n-pentanoïque;
(b) où le composant acide se compose, sur base de la quantité totale d'acide carboxylique, d'au maximum 30% en moles d'acides monocarboxyliques en C5 à C9, saturés, ramifiés, et
(c) où le composant acide se compose, en la quantité restante suivant (a) et (b), d'acides monocarboxyliques saturés, non ramifiés en C6 à C10, et

(B) un polyhydroxyalcool comme composant alcool, avec 3 à 6 radicaux hydroxyle, ainsi qu'un ou deux atomes de carbone quaternaires.

**2.** Lubrifiant suivant la revendication 1, dont le composant alcool est le pentaérythritol et/ou le dipentaérythritol.

**3.** Lubrifiant suivant la revendication 1 ou 2, consistant en un ester ou un mélange d'esters dont le composant acide à longue chaîne non ramifié suivant (A) (c) se compose d'acides monocarboxyliques non ramifiés, saturés en C6 à C9.

**4.** Lubrifiant suivant la revendication 1, 2 ou 3, consistant en un ester ou un mélange d'esters dont le composant acide ramifié suivant (A) (b) se compose de l'acide 2-éthylhexanoïque.

**5.** Lubrifiant suivant l'une quelconque des revendications 1 à 4, consistant en un ester ou un mélange d'esters, dont le composant acide ramifié suivant (A) (b) se compose de 3 à 10% en moles d'un acide monocarboxylique ramifié, sur base de la quantité totale d'acide carboxylique.